# EUROPEAN PATENT APPLICATION

(11) **EP 3 557 381 A1**
(43) Date of publication of application: **23.10.2019**
(21) Application number: 19169942.0
(22) Date of filing: 17.04.2019
(51) Int. Cl.: G06F 3/01, G06F 3/041

(54) **USER INTERFACE DEVICE**

(30) Priority: 19.04.2018 DE 102018109438
(71) Applicant: Panasonic Automotive Systems Europe GmbH, 63225 Langen (DE)
(72) Inventor: Grande, Salvatore, 63225 Langen (DE); Vecciu, Roberto, 63322 Rödermark (DE)
(74) Representative: Manitz Finsterwald Patent- und Rechtsanwaltspartnerschaft mbB

(57) **Abstract**

User interface device, in particular for an infotainment system of a vehicle and/or a vehicle control system, comprising a display system for presentation of content to a user, and at least one electroactive polymer actuator for providing a feedback to the user by mechanical stimulation, wherein the actuator comprises a plurality of actuator layers, said actuator layers being applied layer-by-layer onto a system component of said display system.

## Description

The present invention refers to a user interface device, in particular for an infotainment system of a vehicle and/or a vehicle control system, a vehicle electronic system with a user interface device, a vehicle as well as a method for the production of a user interface device.

User interface devices are increasingly equipped with touchscreens, such as in smartphones, tablets, music players or infotainment systems of vehicles. This allows a convenient operation of the respective device or system. In order to improve feedback to a user, it is known to provide electromechanical actuators in such interface devices. Electromechanical actuators may, for example, provide a haptic feedback for an input operation.

However, electromechanical actuators also increase the complexity of the respective interface device, and therewith also the costs for production and assembly. Furthermore, the arrangement of electromechanical actuators may require additional space and therefore lead to an increased size of the respective interface device and/or require design adaptations of further components.

It has therefore been an object of the present invention to provide a user interface device which may provide a mechanical feedback to a user and may at the same time be produced and/or assembled with reduced effort and costs. It has further been an object of the present invention to provide a vehicle electronic system and a vehicle with a user interface device, as well as a method for the production of a user interface device.

In view of the user interface device, said object has been solved with the features of independent claim 1. This object has also been solved with the features of independent claims 11 and 12, respectively A method according to the present invention comprises the features of independent claim 13. A method according to the present invention is also subject to independent claim 15. Preferred embodiments are subject to the dependent claims, and will be discussed in the following.

A user interface device according to the present invention is particularly suitable for input and/or output operations. Preferably, the user interface device according to the present invention may be configured for and/or arranged within an infotainment system of a vehicle, a smartphone, a tablet device and/or a music player.

A user interface device according to the present invention comprises a display system for presentation of content to a user, and at least one electroactive polymer actuator for providing a feedback to the user by mechanical stimulation. According to the present invention, the actuator comprises a plurality of actuator layers, which are applied layer-by-layer onto a system component of said display system.

By applying the actuator layers layer-by-layer onto a system component of said display system, it is possible to create or build the actuator during the production and/or final assembly of the user interface device. Accordingly, the production of the respective actuator may be efficiently aligned and/or coordinated with further production and/or assembly steps for the user interface. Production effort and costs may therefore be reduced. At the same time, the properties of the actuator may be adapted to the specific requirements of the interface device.

Furthermore, electroactive polymer actuators, such as dielectric elastomer actuators, have a short response time, and therefore allow generating a quick mechanical feedback and also a high number of different feedback types. Such actuators may also be of low weight, and therefore the energy to mass ratio may be high compared to other actuator technologies. Electroactive polymer actuators may furthermore be adapted to any kind of component material, such as glass or plastic materials, and also to any kind of component shapes, also 3D shapes. Such actuators may also be used with a large frequency range, and are characterized by low susceptibility to contamination. Finally, such actuators may provide a return spring functionality, which may improve the finger touch comfort for users. The return spring functionality of the actuators may be provided due to their elasticity. It is also possible that the stiffness of the actuators is changed applying a voltage, and the user can perceive the movement of the cover soft or hard.

According to a preferred embodiment, at least one of the actuator layers is applied directly or indirectly onto a system component of said display system. That is, the first actuator layer may be applied directly onto the system component, particularly without any further layer or material in between. Thereby, the production process may be further simplified. It is also possible to apply the first actuator layer indirectly onto the respective system component, for example, with a material layer in between. The arrangement of the actuator may thereby be further adapted to the requirements of the user interface and/or the type of its intended use.

According to a preferred embodiment, an adhesive may be provided between the actuator and the respective component of the display system, which reduces the risk of an unintentional detachment. The actuator layers may also be applied to the respective component of the display system free of additional adhesives, whereby costs may be further reduced.

According to a yet further embodiment, the actuator, particularly when seen in a plan view along the actuation orientation and/or when seen in a side view under an angle to the actuation orientation, may have a customized shape and/or a freeform shape. The design flexibility may thereby be improved, particularly for the actuator itself and/or for any further component of the display system. That is, a layer-by-layer application of an actuator onto a system component of the display system may be conducted with a customized shape and/or a freeform shape of the actuator. The actuator may thus be adapted to the specific requirements of the user interface, in particular its further components. For example, the adaptation and/or customization of the actuator in view of possible design properties or geometrical restrictions of further components may be simplified accordingly.

It may further prove advantageous, when the actuator is arranged or part of an actuator pattern and/or a customized actuator pattern and/or a continuous actuator pattern, preferably when seen in a plan view along the actuation orientation of the actuator. This allows a suitable actuator arrangement across a comparably large surface of the respective system component.

According to a further embodiment, a plurality of actuators are each applied layer-by-layer onto a system component and/or wherein a plurality of actuators are arranged in an actuator pattern and/or a customized actuator pattern and/or a continuous actuator pattern and/or wherein a plurality of actuators are connected to each other, preferably to form a customized and/or freeform pattern shape. Such arrangement of a plurality of actuators may further enhance the feedback functionality provided by said actuators.

According to a yet further embodiment of the present invention, a bonding layer is provided between two system components of said display system, preferably between a touchscreen and a transparent cover element layered onto the touchscreen and/or between a display device and a touchscreen layered onto said display device and/or between a display device and a transparent cover element layered onto said display device and/or between a display device and a casing for the display device and/or the display system. Such a bonding layer may improve the optical characteristics of the user interface device and/or provide a fixing functionality or contribute to the attachment of the respective components. The providing of the bonding layer may be aligned with the layer-by-layer application of the actuator layers, therewith further improving the efficiency of production and/or assembly.

According to a further embodiment, the bonding layer may be made from a polymer material. Polymer materials are available in various compositions and with various properties, and may effectively provide the required bonding functionality. Furthermore, by providing a bonding layer from polymer material, the entire production and/or assembly may be further simplified as also the electroactive polymer actuator requires the application of a polymer material. In this regard the alignment of the required application processes and/or the application of production devices and/or facilities may be conducted with improved efficiency.

According to a particularly preferred embodiment, the bonding layer and at least one of the actuator layers are made from the same material. This enables a particularly efficient production of the bonding layer and the respective actuator layer. The bonding layer and the respective actuator layer may be applied during one and the same production step and/or by subsequent production steps.

In the present context, one production step may comprise the application of an uninterrupted and/or an interrupted material layer, such as a bonding layer and/or an actuator layer. A different production step may, for example, comprise curing and/or heating of an applied layer. That is, subsequent to the application of an uninterrupted and/or an interrupted material layer, a curing and/or heating of this layer may be conducted in a further production step. The application of different layers onto each other may be realized by different and/or subsequent production steps.

Furthermore, the same dispensing devices may be used for the application of the bonding layer and the respective actuator layer, in particular without any adaptations. It is also possible, that different dispensing devices are used for the application of the bonding layer and at least one of the actuator layers.

According to a yet further embodiment, the bonding layer and at least one of the actuator layers are made from materials belonging to the same material group, preferably the same group of polymers. The properties of the bonding layer and the respective actuator layer may thus be different and specifically adapted in view of the specific requirements.

Preferably, the bonding layer and at least one of the actuator layers may be made from materials including the same or partly the same set of material components, more preferably with an identical or different component mixing ratio. In case an identical component mixing ratio is chosen, the characteristics of the bonding layer and the actuator layer may be the same. In case of a differing component mixing ratio, the characteristics of the bonding layer and the actuator layer may also be different and particularly be adapted to the respective requirements. For example, the component mixing ratio of the respective actuator layer may be chosen in view of higher elastic properties, as compared to the bonding layer.

It may further prove advantageous, if at least one of the actuator layers and/or the bonding layer is made from a silicone or acryl based polymer. Such a polymer may provide adequate optical as well as mechanical characteristics.

Preferably the respective actuator layer and/or bonding layer may be made from a cured liquid silicone resin and/or an addition cured silicone resin and/or a platinum-catalysed silicone resin. The application of the respective material may thereby be facilitated. In particular, the respective material may be applied in liquid form and cured to a solid material thereafter.

According to a further embodiment, at least one of the actuator layers and/or the bonding layer may be made from a polymer, preferably a silicone resin, containing a catalyst, preferably a platinum catalyst, a cross-linker, fillers and/or an additive. The properties of the actuator layers and/or the bonding layer may thereby be suitably adapted to the respective requirements. In addition to this, the curing of the material subsequent to its application onto the respective system component may be facilitated. For example, cross-linkers allow curing a liquid polymer material into a solid state.

According to a yet further embodiment, at least one of the actuator layers and/or the bonding layer is made from a multi-component polymer, preferably a two-component polymer and/or a two-component silicone resin, and/or wherein one material component contains a catalyst and a further material component contains a cross-linker and/or said material components are mixed for curing.

According to a yet further embodiment, at least the bonding layer may be made from an optically clear resin and/or from an optically clear adhesive, preferably from a cured liquid optically clear adhesive or non-liquid optically clear adhesive tape. The optical properties of the adjacent components, preferably the bonded cover element and/or the touchscreen and/or the display element may be enhanced thereby. In particular, the bonding layer may be configured for optical bonding, preferably between a touchscreen and a transparent cover element layered onto the touchscreen, between a display device and the touchscreen layered onto the display device or between a display and a transparent cover element layered onto the display device in case no touchscreen is present. Undesirable light refractions on the boundaries of the cover element and/or the touchscreen may thereby be avoided or at least reduced.

Furthermore, the actuator may comprise at least two electrode layers and at least one polymer layer sandwiched between the electrode layers. It is furthermore possible to stack more than one polymer layer and more than two electrode layers onto each other in an altering fashion, in order to achieve a mechanical feedback stimulation with a higher intensity and/or lower voltage. In such arrangement, the final actuator displacement may particularly be a sum of several displacements obtained, which allows applying lower voltage values.

At least one of the electrode layers may be made from a graphite material and/or contain carbon powder and/or carbon nanotubes and/or silver nanowires. Graphite material may provide a reliable electrode functionality and the application of nanotubes may contribute to improved optical characteristics of the actuator, specifically for arrangements of the actuator in visible areas. Furthermore, the at least one polymer layer may be made from an elastomer material, preferably from a dielectric elastomer material. Such an elastomer may provide a high degree of elasticity, thus enabling an intense mechanical feedback.

Accordingly, the actuator may be configured as a dielectric elastomer actuator. Such actuators may have a short response time, which further improves the achievable mechanical feedback, in particular haptic feedback.

According to a yet further embodiment, the bonding layer and at least one of the actuator layers may be provided onto a component of the display system with interruption. The bonding layer and the respective actuator may thus be separated from each other. It is also possible to provide the bonding layer and at least one of the actuator layers onto a system component of the display system free of interruptions and/or in a fashion connected to each other. That is, the bonding layer and at least one of the actuator layers may be applied onto the system component in one production step, which may further reduce effort and costs.

According to a yet further embodiment, the display system comprises at least two system components and the actuator is arranged between said two system components and/or wherein the actuator extends between two system components of the display system, preferably in an actuation orientation. Thereby adequate support of the actuator may be ensured, which may further improve the intensity of mechanical feedback stimulation.

According to a yet further embodiment, the actuator may be arranged and/or configured for mechanical stimulation in an orientation along or under an angle to the thickness extension of a cover element, a touchscreen and/or a display device. An intense mechanical feedback may thereby be achieved. It is also possible that a plurality of actuators is provided and at least two actuators are arranged and/or configured for mechanical stimulation in different orientations. Thereby, different mechanical stimulations for different feedback types or feedback purposes may be generated.

The actuator may be arranged and/or configured for generating forces, vibrations, or motions to be sensed by the user and/or for haptic, tactile and/or kinesthetic feedback, preferably during use of the display system and/or via a cover element of the display system. That is, dependant on the arrangement of the actuator, the respective mechanical stimulation may be transmitted from the actuator directly to the cover element or via an additional component to the cover element, and finally to the user.

According to a further embodiment, the actuator may be arranged and/or configured for surface texture imitation. That is, the type of mechanical stimulation may cause the impression of a specific surface texture to a user of the interface device.

In a yet further embodiment of the interface device, the actuator may be configured as a sensor, preferably a force detecting sensor. For example, the application of force to a cover element of the display system may be sensed by the actuator and subsequently lead to predefined functions. Such predefined functions may be the change of operational modes of the interface device, for example from standby mode to an active mode or vice versa.

The use of force sensing may also provide additional functionality for determining user intent and can be applied to identify unintended touch operations by the user, which may improve safety, or also be used to correctly enable haptic effects. Furthermore, different types of touch operations, such as a soft touch or hard touch operations may be differentiated in order to provide different functionalities, for example, opening a preview window by soft touch and fully opening a window by a hard touch or opening a menu by soft touch and completing a selection by further increasing pressure to a hard touch.

In a preferred embodiment, the display system may comprise a display device for content presentation, preferably an electronic visual display and/or an LCD display (Liquid Crystal Display) and/or an OLED display (Organic Light Emitting Diode) and/or an AMOLED display (Active Matrix Organic Light Emitting Diode), and/or a touchscreen, preferably a capacitive touchscreen, and/or a transparent cover element with a touch surface, preferably a transparent glass, PET (Polyethylene terephthalate) or PC (Polycarbonate) cover element, and/or a casing, preferably for the display device, touchscreen and/or cover element. Such a configuration may provide reliable display functionalities with a high degree of user comfort. The touchscreen may particularly be layered onto the display device and/or the cover element may be layered onto the touchscreen. The touchscreen and/or display device may be suitably protected by the cover element.

The display system may comprise a support element for transferring motion and/or mechanical stimulation from the actuator to a further component, preferably to the casing, display device, touchscreen and/or cover element, and/or for transmitting motion and/or mechanical stimulation from the actuator to a cover element and/or a touchscreen and/or a display device, preferably a TFT unit, of the display system. Such a support element may have the form of a support frame and may facilitate the arrangement of an actuator in overall designs with limited space. The support element may be configured for transmitting motion and/or mechanical stimulations in different orientations. That is, the support element may be in contact, particularly direct or indirect contact, with differently oriented actuators for transmitting differently oriented mechanical stimulations.

In a further embodiment, the actuator layers are applied layer-by-layer onto a cover element, a casing and/or a support element of said display system. Such components provide a solid basis for the application of the actuator layers and therewith a reliable process.

The actuator may extend from a cover element to a casing of the display system, preferably from the cover element to a support protrusion of the casing. Thus, only the cover element is actuated, which has a comparably low mass and therefore allows providing mechanical feedback with only little energy consumption.

It is furthermore possible that the actuator extends from a casing to a support element of the display system and/or wherein the support element extents from the actuator to a cover element and/or to a touchscreen of the display system. The actuator can thus be arranged in position further inside the interface device, in particular in a portion with more available space, and the mechanical actuation can be transmitted via the support element. This allows a more compact overall design of the interface device.

Furthermore, the actuator may extend from a casing to a display device of the display system and/or wherein the display device extents from the actuator to a touchscreen and/or to a bonding layer between the display device and the touchscreen. Such an arrangement is particularly robust and simple to manufacture.

It is further possible that the actuator extends from a casing to a support element of the display system, said support element extending from the actuator to a TFT unit and/or through a backlight unit of the display system. That is, the TFT unit and further components layered onto the TFT unit may be actuated, whereas other components such as the backlight of the display system remain unactuated. The actuated mass of the interface device may thus be reduced, which allows a more efficient and energy saving mechanical feedback.

A further aspect of the present invention refers to a user interface device, preferably according to the above description, comprising a cover element for covering a touchscreen and/or display device, and at least one electroactive polymer actuator for providing a feedback to a user by mechanical stimulation, wherein the actuator comprises a plurality of actuator layers, said actuator layers being applied layer-by-layer onto the cover element. The cover element may be part and/or form a display system for the presentation of content to a user.

A further aspect of the present invention refers to a vehicle electronic system, in particular to a vehicle control system and/or vehicle infotainment system, with a user interface device, preferably according to the above description, said user interface comprising a display system for presentation of content to a user, and at least one electroactive polymer actuator for providing a feedback to the user by mechanical stimulation. Such a vehicle electronic system may be particularly designed, configured for and/or installed in a car, truck or bus.

A yet further aspect of the present invention refers to a vehicle, in particular to a car, truck or bus, comprising an above described user interface device, infotainment system and/or vehicle control system. The user interface device of the vehicle may for example be arranged in a dashboard or in a headrest of a seat.

A yet further aspect of the present invention refers to a vehicle, in particular automobile, bus or truck, with a user interface device, preferably according to the above description, said user interface comprising a display system for presentation of content to a user, and at least one electroactive polymer actuator for providing a feedback to the user by mechanical stimulation. The electroactive polymer actuator may particularly be configured as dielectric elastomer actuator. Dielectric elastomer actuators are electroactive polymer actuators containing an elastomer material, such as a silicone or acrylic material.

Electroactive polymer actuators, such as dielectric elastomer actuators, have a short response time, and therefore allow generating a quick mechanical feedback and also a high number of different feedback types. Furthermore, such actuators may be of low weight, and therefore the energy to mass ratio may be high compared to other actuator technologies. Electroactive polymer actuators, particularly dielectric elastomer actuators, may furthermore be adapted to any kind of component materials, such as glass or plastic materials, and also to any kind of component shapes, also 3D shapes. Such actuators may also be used with a large frequency range, and are characterized by low susceptibility to contamination. Finally, such actuators may be configured as a return spring element, which may improve the finger touch comfort for users.

A yet further aspect of the present invention refers to a method for the production of a user interface device, preferably according to the above description, comprising the steps of providing a system component of a display system for presentation of content to a user, and building at least one electroactive polymer actuator for the providing of a feedback to the user by mechanical stimulation, wherein the building of the actuator is conducted by applying a plurality of actuator layers layer-by-layer onto the system component. The layer-by-layer application may be conducted directly or indirectly onto the respective component.

According to an embodiment of the method, a bonding layer may be applied between at least two system components of said display system, wherein the bonding layer and at least one of the actuator layers are applied by the same material dispensing device or facility and/or by using the same material and/or material components and/or materials belonging to the same material groups. This allows producing and/or assembling the interface device with increased efficiency and therefore reduced costs.

Preferably, at least one of the actuator layers is applied subsequent to the application of the bonding layer. For example, at least one of the electrode layers is applied subsequent to the application of the bonding layer. Thus, the building of the actuator may be finalized after the application of the bonding layer. Accordingly, the bonding layer may be applied in a production step during the building of the actuator, which allows coordinating the entire production and/or assembly of the interface device particularly efficient.

Furthermore, the application of the bonding layer and the at least one actuator layer may be conducted in one production step, with or without interruption. For example, the same dispensing nozzle may be used for applying the bonding layer and at least one of the actuator layers. The dispensing step may for example be conducted without interruption and therefore by dispensing the same material. It is also possible to vary the material or the material composition and/or mixing ratio during the material dispensing step, depending on the surface area. Thus, the properties of the bonding layer and the actuator layer may be different. The dispensing step may also be conducted with interruption, in order to separate the bonding layer and the actuator layer visibly.

The details and/or advantages described above with regard to the user interface device apply also to the vehicle electronic system, the vehicle, as well as the method described above.

The features and advantages of the various embodiments of the present invention will, in the following, be described with reference to the Figures.
- Fig. 1: shows a perspective view of a cover element of a user interface device according to an embodiment of the present invention from an upper side,
- Fig. 2: shows a perspective view of the cover element in Fig. 1 from a bottom side,
- Fig. 3: shows a plan view onto the bottom side of the cover element in Fig. 2,
- Fig. 4: shows a cross-sectional view of a user interface device along plane A-A indicated in Fig. 1,
- Fig. 5: shows a cross-sectional view of a user interface device according to a further embodiment of the present invention,
- Fig. 6: shows a cross-sectional view of a user interface device according to a further embodiment of the present invention,
- Fig. 7: shows a cross-sectional view of a user interface device according to a further embodiment of the present invention,
- Fig. 8: shows a perspective view of a user interface device according to an embodiment of the present invention from an upper side and with detached casing,
- Fig. 9: shows a cross-sectional view of a user interface device along plane B-B indicated in Fig. 8,
- Fig. 10: shows a cross-sectional view of a user interface device according to a further embodiment of the present invention, and
- Fig. 11: shows a cross-sectional view of a user interface device according to a further embodiment of the present invention.

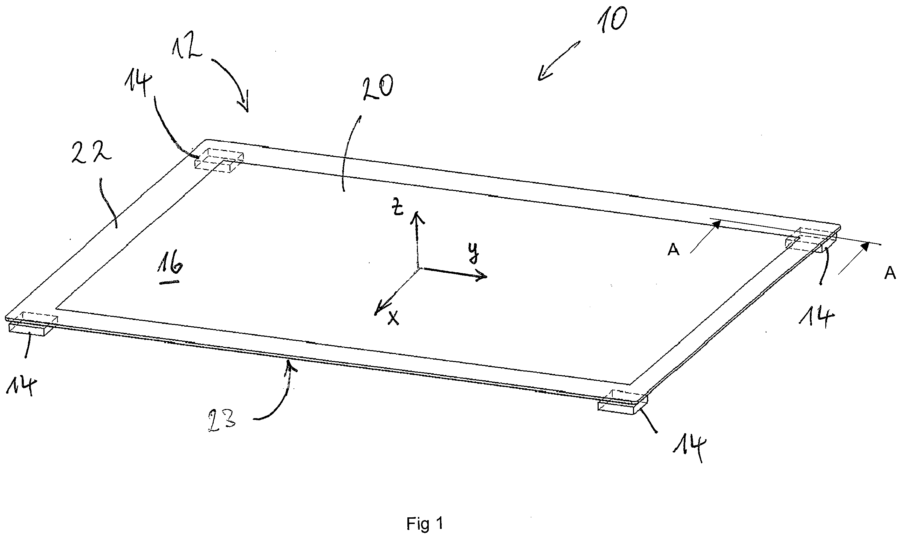

Figures 1 to 4 refer to a first embodiment of a user interface device 10 according to the present invention. The user interface device 10 is particularly configured for an infotainment system of a vehicle and/or for a vehicle control system. The user interface device 10 may comprise a display system 12 for presentation of content to a user, and at least one electroactive polymer actuator 14 for providing a feedback to the user by mechanical stimulation, in particular an haptic feedback by mechanical stimulation. The actuator 14 may comprise a plurality of actuator layers, said actuator layers being applied layer-by-layer onto a system component of said display system 12.

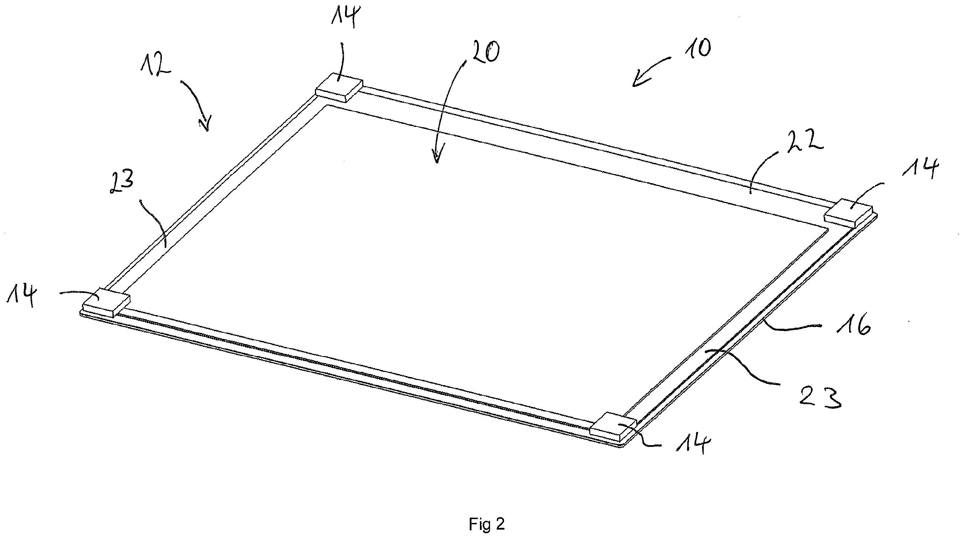

In the embodiment according to Figures 1 to 4, there are provided four actuators 14, which are applied to a transparent cover element 16 of the display system 12. The upper side of said cover element 16 is shown in Figure 1, said upper side providing a touch surface for a user, in particular for inputting control commands by a user. Figure 2 shows a bottom side of the transparent cover element 16, which is provided opposite to the touch surface on the upper side. It may be comprehended that the actuators 14 are applied to the transparent cover element 16 on its bottom side. The transparent cover element 16 may at least section wise be transparent, and be of a glass, PC or PET material, for example.

More particularly, the transparent cover element 16 may have a transparent cover portion 20 as well as an untransparent cover portion 22. The untransparent cover portion 22 may be a boundary portion, at least section wise enclosing the transparent cover portion 20. Thus, the transparent cover element 16 may be generally transparent but may also comprise untransparent portions. The untransparent cover portion 22 may be provided by a glass black print 23 applied to the bottom side of the transparent cover element 16.

The transparent cover portion 20 may be configured to be touched by a user for input operations and/or allows output operations, such as the presentation of content. Accordingly, content displayed by a display device, which will be described later, may be seen through the transparent cover element 16, in particular through the transparent cover portion 20. At the same time, a touchscreen, also to be described later, may be operated through the transparent cover element 16, in particular through the transparent cover portion 20.

Preferably, the actuators 14 are arranged outside or substantially outside said transparent cover portion 20 in order to avoid optical deteriorations. More particularly, the actuators 14 may be applied onto said glass black print 23 on the bottom side of the transparent cover element 16. That is, the actuators 14 are preferably arranged such as being invisible through the transparent cover element 16 or substantially hidden behind the untransparent cover portion 22 of the transparent cover element 16. In particular, the transparent cover portion 20 may at least section wise be enclosed by the untransparent cover portion 22, said boundary portion 22 covering at least one of the actuators 14 and/or at least a portion of the respective actuator 14.

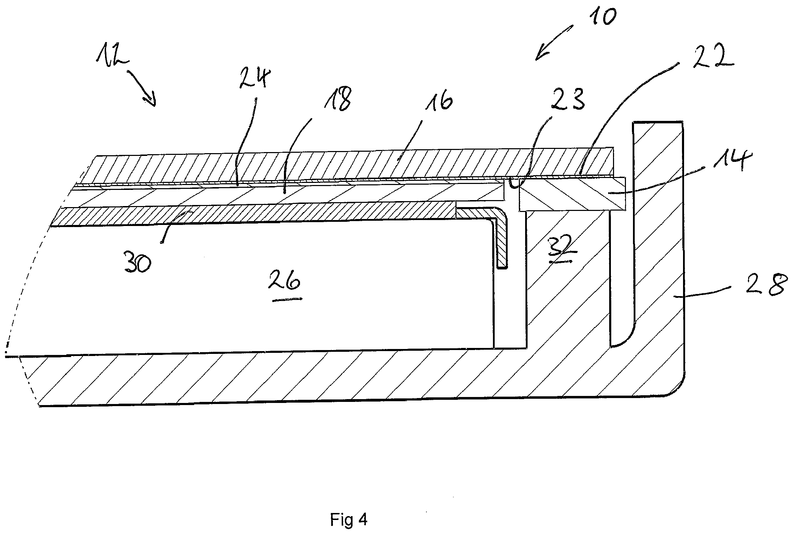

The display system 12 may furthermore comprise a touchscreen 18, which is provided on the bottom side of the transparent cover element 16, as may be comprehended from Figure 4. The touchscreen 18 may be a capacitive touchscreen, in particular a projected capacitive touchscreen. The touchscreen 18 may have touchscreen sensible area, which may have a slightly larger size than the transparent cover portion 20. That is, the untransparent cover portion 22 may cover a small portion of the touchscreen sensible area.

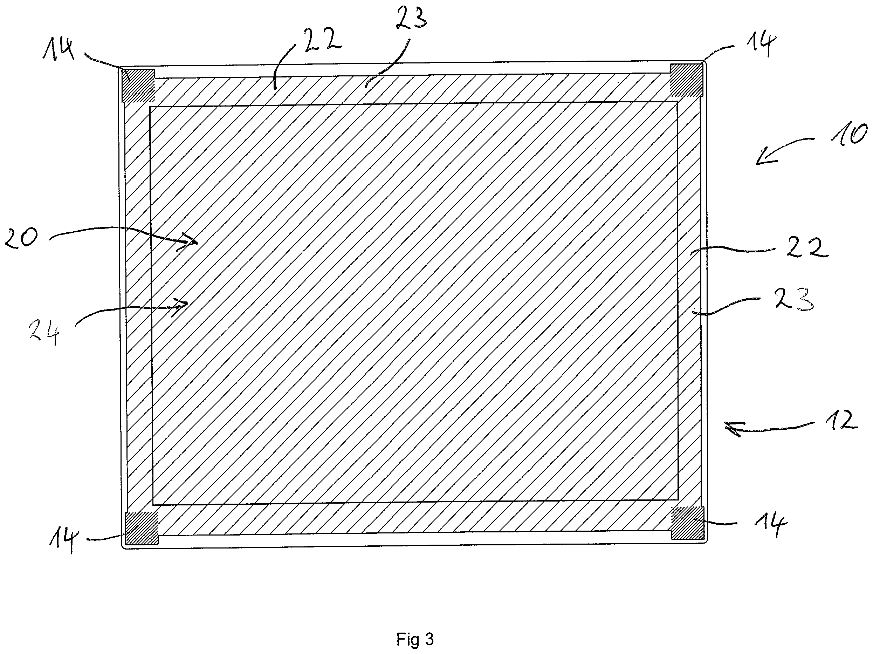

As may further be comprehended from Figure 4, a bonding layer 24 is provided between the transparent cover element 16 and the touchscreen 18. The bonding layer 24 may be an optical bonding layer and/or configured for optical bonding. Thereby, refractions may be avoided or reduced. The bonding layer 24 may also provide an adhesive functionality for the attachment of the cover element 16 and the touchscreen 18. If present on the respective surface section of the transparent cover element 16, the bonding layer 24 may be applied onto the black print 23. Otherwise, the bonding layer 24 is directly applied onto the bottom surface of the transparent cover element 16, particularly in the region of the transparent cover portion 20, without any further layer in between. In Figure 3, the bonding layer 24 is indicated with hatched lines, and it is comprehendible that the bonding layer 24 may be applied to the entire transparent cover portion 20 and at least parts of the untransparent cover portion 22.

It has been mentioned above that the actuators 14 may be applied layer-by-layer onto the transparent cover element 16. Thus, the actuators 14 may be customized by direct application onto the transparent cover element 16. The actuators 14 may also form a pattern, in particular a customized pattern. As may be comprehended from the plan view in Figure 3, the actuators 14 may have a rectangular or square cross sectional shape. The cross sectional shape may also be different, for example round or elliptic. The actuators 14 may also have a freeform shape, which is not shown here. Finally, the actuators 14 may also be applied on the bottom side of a transparent cover element 16 having a 3-dimensional shape, for example a specifically shaped surface or a surface with a freeform topology.

From Figure 4 it may furthermore be comprehended that the display system 12, apart from the transparent cover element 16 and/or the touchscreen 18, may contain further components. In particular, the display system 12 may contain a display device 26 and/or a casing 28. The display device 26 may be a Liquid Crystal Display with a TFT unit and/or a backlight unit. The display device 26 may also be an OLED display (Organic Light Emitting Diode) or an AMOLED display (Active Matrix Organic Light Emitting Diode). The display device 26 may generate an image, which can be seen by a user through the transparent cover element 16, in particular the transparent cover portion 20, and/or through the touchscreen 18.

A further bonding layer 30 may be provided between the display device 26 and the touchscreen 18. Also the bonding layer 30 may be configured as an optical bonding layer and/or provide an adhesive functionality. The application of the bonding layer 30 onto the touchscreen 18 and/or onto the display device 26 may be conducted in one step and/or together with the application of at least one actuator layer. In case no touchscreen is present, the bonding layer 30 may be applied onto the transparent cover element 16 and/or the display device 26.

The bonding layer 30 and the respective actuator layer may be applied without interruption and/or connected to each other. The bonding layer 30 may be made from a polymer material that is identical or similar to the polymer material of the respective actuator layer. In contrast to the bonding layer 30, the actuators 14 additionally contain at least two electrode layers, for example from a graphite material and/or applied by carbon powder.

It is also possible that the actuators 14, in particular at least one actuator layer of the respective actuator, may be applied onto the transparent cover element 16 together with the bonding layer 24 or in one step. The bonding layer 24 and the respective actuator layer may therefore be applied onto the transparent cover element 16 without interruption and/or connected to each other. The bonding layer 24 may also first be applied to the touchscreen 18, and subsequently attached to the transparent cover element 16.

The bonding layer 24 may again be made from a polymer material that is identical or similar to the polymer material of the respective actuator layer. In contrast to the bonding layer 24, the actuators 14 additionally contain at least two electrode layers, for example from a graphite material and/or applied by carbon powder. The bonding layer 24 may also be applied independent from the actuators, for example, in form of an optically clear adhesive tape. The actuator 14 may be applied onto or besides said optically clear adhesive tape.

The casing 28 may encase the display device 26, the touchscreen 18 and/or the transparent cover element 16. The actuators 14 may be arranged within the casing 28. In the embodiment of Figure 4, each actuator 14 may extend between the transparent cover element 16 and a support protrusion 32 of the casing 28. The respective actuator 14 is therefore directly supported on the casing 28 and at the same time arranged for actuating merely the transparent cover element 16, which has a comparably low mass.

In the embodiment according to Figure 4, the respective actuator 14 may also be applied onto the casing 28, in particular the support protrusion 32, and subsequently attached, via its upper actuator layer, to the transparent cover element 14.

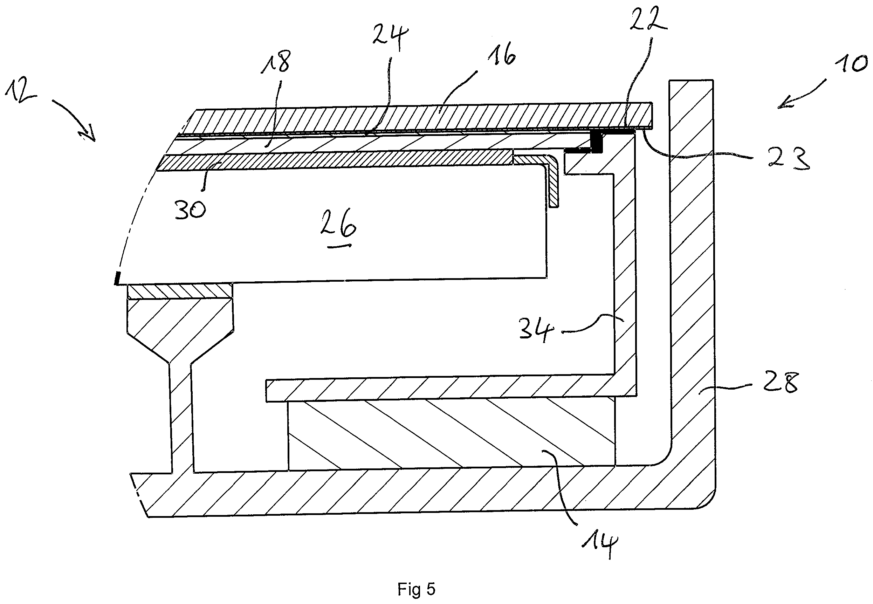

In the embodiment according to Figure 5, the display system 12 additionally comprises a support element 34 for transferring motion and/or mechanical stimulation from the actuator 14 to a further component. The support element 34 may be designed as a support frame. Accordingly, the shown actuator 14 is not applied to the transparent cover element 16, but extends between the casing 28 and the support element 34. The support element 34 is attached to the transparent cover element 16 and/or the touchscreen 18, and may thus extend between the actuator and the cover element 16 and/or the touchscreen 18. However, the contact surface between the support element 34 and the transparent cover element 16 and/or the touchscreen 18 may be small. Thus, the area around the transparent cover portion 20, in particular the untransparent cover portion 22 with the glass black print, and/or the area around the touchscreen 18 may be kept small, while at the same time providing an actuator 14 with a comparably large size. In addition to this, only a comparably small mass is actuated via the actuator 14. The respective actuator 14 may be applied layer-by-layer onto the casing 28 and/or onto the support element 34.

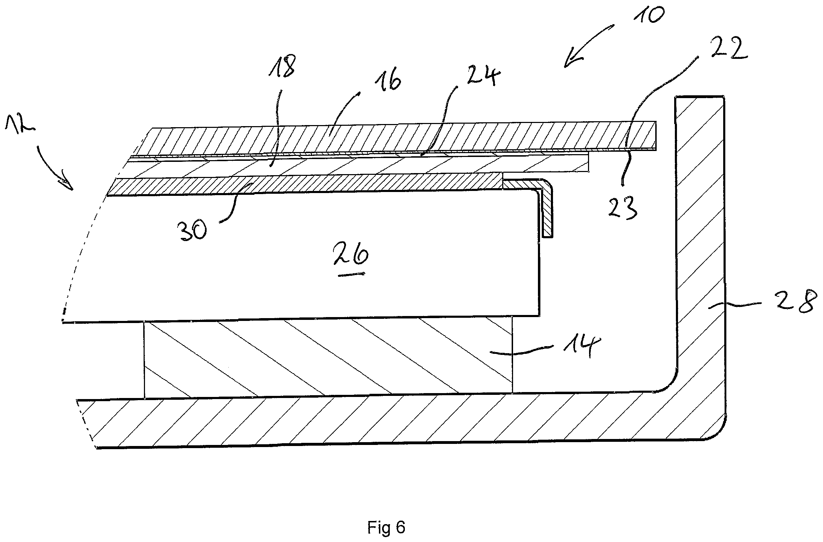

In the embodiment according to Figure 6, the shown actuator 14 extends between the casing 28 and the display device 26. Thus, the area around the transparent cover portion 20, in particular the untransparent cover portion 22 with the glass black print, and/or the area around the touchscreen 18 may be kept small, while at the same time providing an actuator 14 with a comparably large size. In addition to this, a robust overall design is achieved. The respective actuator 14 may be applied layer-by-layer onto the casing 28 and/or the support element display device 26.

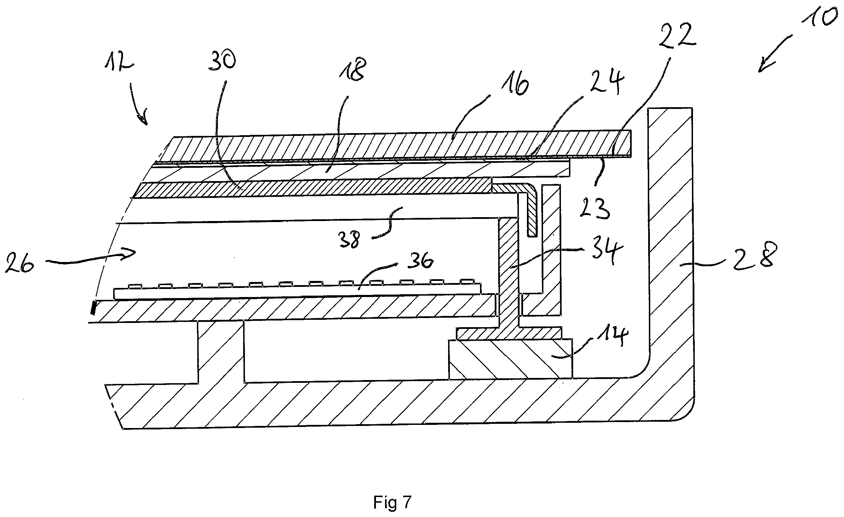

In the embodiment according to Figure 7, the display system 12 again comprises a support element 34 for transferring motion and/or mechanical stimulation from the actuator 14 to a further component. The support element 34 may be designed as a support frame. The shown actuator 14 extends between the casing 28 and the support element 34. A backlight unit 36 of the display device 26 may be arranged in a fixed manner and/or remain unactuated. For this purpose, the support element 34 may extend through and/or pass by the backlight unit 36 of the display device 26 and may be attached to a TFT unit 38 of the display device 26. Thus, the backlight unit 36 is not actuated by the actuator 14, whereby the actuated mass may be maintained low. The support element 34 may also extend through and/or pass by the backlight unit 36 as well as the TFT unit 38 of the display device 26 and be attached to the transparent cover element 16, in order to further reduce the actuated mass. That is, the support element 34 may directly extend between the actuator 14 and the transparent cover element 16 without passing through any further component. Due to the bonding layers 24 and 30, the transparent cover element 14, the touchscreen 18 and the TFT unit 38 may be actuated, whereas the backlight unit 36 may remain unactuated. Again, the area around the transparent cover portion 20, in particular the untransparent cover portion 22 with the glass black print, and/or the area around the touchscreen 18 may be kept small, while at the same time providing an actuator 14 with a comparably large size. The respective actuator 14 may be applied layer-by-layer onto the casing 28 and/or the support element 34. The display device 26 may comprise an opening for the support element 34.

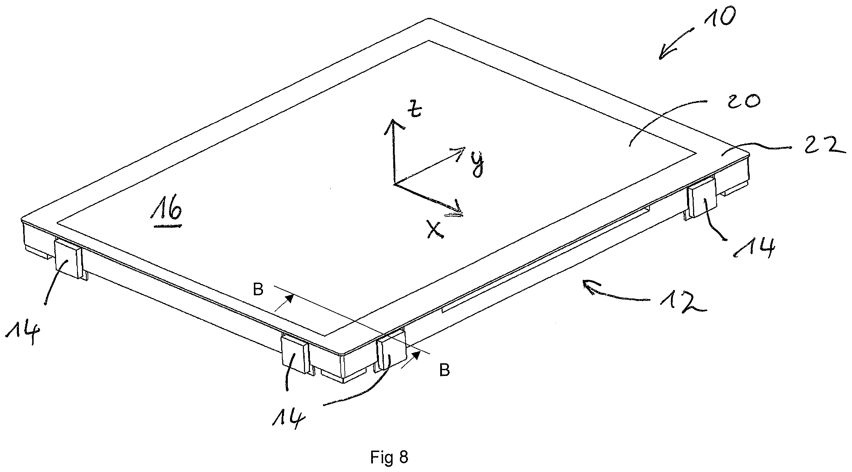

The embodiments in Figures 1 to 7 show arrangements, in which the respective actuators 14 have an actuation orientation transverse to the touch surface of the transparent cover element 16. Figure 8 to 11 refer to embodiments with additional actuation along a plane orientation of the transparent cover element 16. As may be seen from the perspective view in Figure 8, the different actuators may enclose an angle relative to each other, such that actuation in different orientations may be provided. In particular, actuators 14 for actuation in x-,y- and/or z-orientation may be provided, whereas an actuation in z-orientation is normal to the plane extension of the transparent cover element 16. The actuators 14 for actuation in x-, y- and/or z-orientation may be different from each other, in particular have a different shape, size, layer structure and/or working principle. The x-, y- and z-orientations are indicated in Figures 1 and 8.

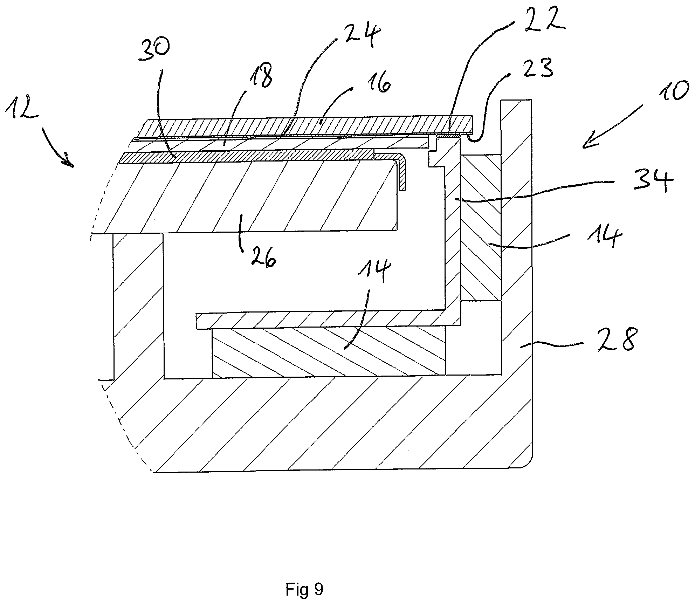

Referring to Figure 9, the display system 12 may comprise a support element 34 for transferring motion and/or mechanical stimulation from the actuators 14 to a further component. The support element 34 may be designed as a support frame. The shown actuators 14 enclose a 90° angle relative to each other and each extend between the casing 28 and the support element 34. The support element 34 is attached to the transparent cover element 16 and/or the touchscreen 18, and may thus extend between the actuators 14 and the transparent cover element 16 and/or the touchscreen 18. Thus, the differently oriented actuations may be suitably transmitted to the transparent cover element 16 and/or the touchscreen 18. Furthermore, the area around the transparent cover portion 20, in particular the untransparent cover portion 22 with the glass black print, and/or the area around the touchscreen 18 may be kept small, while at the same time providing actuators 14 with a comparably large size. In addition to this, only a comparably small mass is actuated via the actuators 14. The respective actuator 14 may be applied layer-by-layer onto the casing 28 and/or the support element 34.

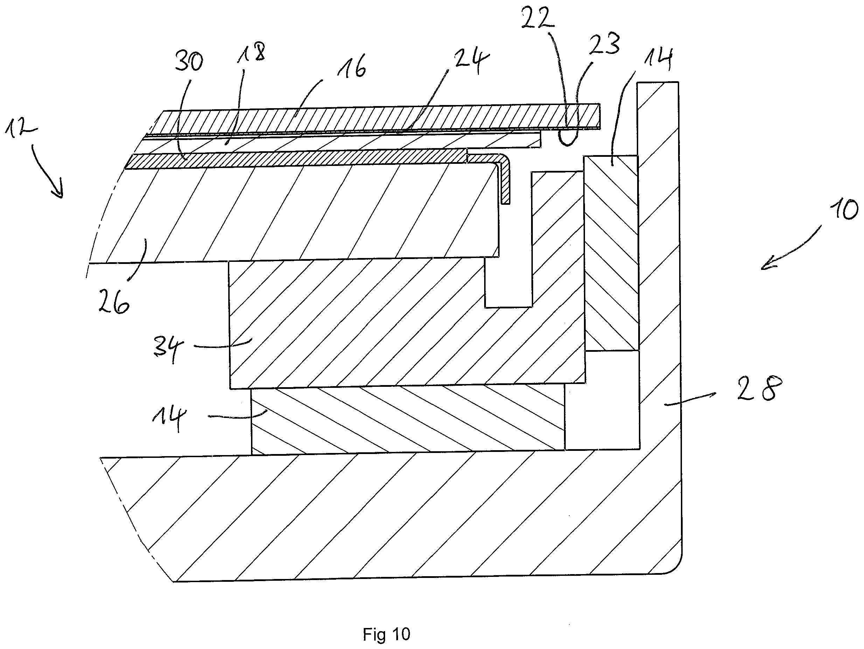

According to Figure 10, the display system 12 may comprise a support element 34 which may again be designed as a support frame. The shown actuators 14 enclose a 90° angle relative to each other and each extend between the casing 28 and the support element 34. The support element 34 is attached to the display device 26, and may therefore extend between the actuators 14 and the display device 26. The differently oriented actuations may therefore be suitably transmitted to the display device 26 and further to the transparent cover element 16 and/or the touchscreen 18. Furthermore, the area around the transparent cover portion 20, in particular the untransparent cover portion 22 with the glass black print, and/or the area around the touchscreen 18 may be kept small, while at the same time providing actuators 14 with a comparably large size. In addition to this, only a comparably small mass is actuated via the actuators 14. The respective actuator 14 may be applied layer-by-layer onto the casing 28 and/or the support element 34.

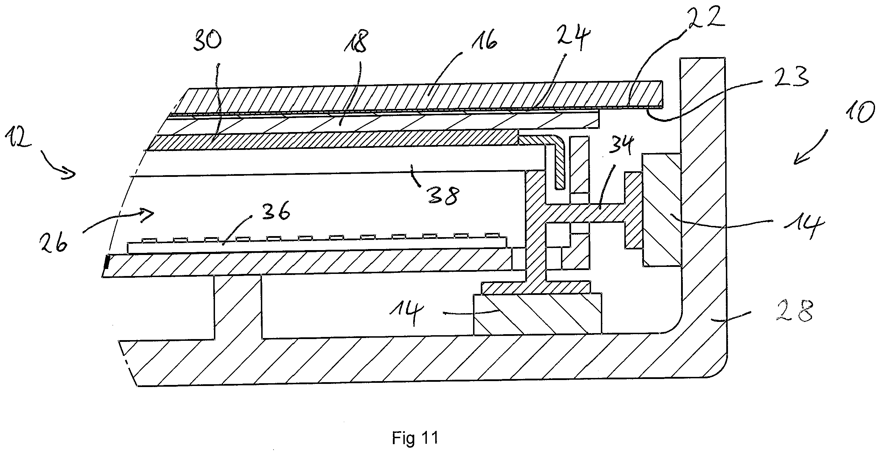

According to Figure 11, the display system 12 may again comprise a support element 34 which may again be designed as a support frame. The shown actuators 14 enclose a 90° angle relative to each other and each extend between the casing 28 and the support element 34. The support element 34 section wise leads through the display device 26. The support element 34 may particularly be attached to the TFT unit 38 of the display device, and therefore extend between the actuators 14 and the TFT unit 38. The support element 34 may extend through and/or pass by a backlight unit 36 of the display device 26. The backlight unit 36 is thus not actuated by the actuators 14. The differently oriented actuations may therefore be suitably transmitted to the TFT unit 38 and further to the transparent cover element 16 and/or the touchscreen 18. The support element 34 may also extend between the actuators and the outer case of the display device 26, and therefore not extend through any component of the display device 26. Furthermore, the area around the transparent cover portion 20, in particular the untransparent cover portion 22 with the glass black print, and/or the area around the touchscreen 18 may be kept small, while at the same time providing actuators 14 with a comparably large size. In addition to this, only a comparably small mass is actuated via the actuators 14. The respective actuator 14 may be applied layer-by-layer onto the casing 28 and/or the support element 34.

The user interface device 14 according to the above described embodiment may particularly be part of a vehicle electronic system, such as a vehicle infotainment system and/or a vehicle control system, which may be fixedly installed within a vehicle, for example, a car, truck or bus. The electroactive polymer actuator 14 in the above described embodiments may preferably be configured and/or designed as dielectric elastomer actuator.

Further aspects of the present invention are described in the following:
According to an aspect of the present invention, a user interface device, in particular for an infotainment system of a vehicle and/or a vehicle control system, comprises a display system for presentation of content to a user, and at least one electroactive polymer actuator for providing a feedback to the user by mechanical stimulation, wherein the actuator comprises a plurality of actuator layers, said actuator layers being applied layer-by-layer onto a system component of said display system.

According to a further aspect, at least one actuator layer is applied directly or indirectly onto a system component of said display system and/or wherein an adhesive is provided between the actuator and the respective component of the display system and/or wherein the actuator layers are applied to the respective component of the display system free of additional adhesives.

According to a further aspect, the actuator has a customized shape and/or a freeform shape and/or wherein the actuator is arranged or part of an actuator pattern and/or a customized actuator pattern and/or a continuous actuator pattern

According to a yet further aspect, a plurality of actuators are applied layer-by-layer onto a system component and/or wherein a plurality of actuators are arranged in an actuator pattern and/or a customized actuator pattern and/or a continuous actuator pattern and/or wherein a plurality of actuators are connected to each other, preferably to form a customized and/or freeform pattern shape.

According to a yet further aspect, a bonding layer is provided between two system components of said display system, preferably between a touchscreen and a transparent cover element layered onto the touchscreen and/or between a display device and a touchscreen layered onto said display device and/or between a display device and a transparent cover element layered onto said display device and/or between a display device and a casing for the display device and/or the display system, and/or wherein the bonding layer is made from a polymer material.

According to a yet further aspect, the bonding layer and at least one of the actuator layers are made from the same material.

According to a yet further aspect, the bonding layer and at least one of the actuator layers are made from materials belonging to the same material group, preferably the same group of polymers, and/or from materials including the same or partly the same set of material components, preferably with an identical or different component mixing ratio.

According to a yet further aspect, wherein at least one of the actuator layers and/or the bonding layer is made from a silicone or acryl based polymer, preferably from a cured liquid silicone resin and/or an addition cured silicone resin and/or a platinum-catalysed silicone resin.

According to a yet further aspect, at least one of the actuator layers and/or the bonding layer is made from a polymer, preferably a silicone resin, containing a catalyst, preferably a platinum catalyst, a cross-linker, fillers and/or an additive.

According to a yet further aspect, at least one of the actuator layers and/or the bonding layer is made from a multi-component polymer, preferably a two-component polymer and/or a two-component silicone resin, and/or wherein one material component contains a catalyst and a further material component contains a cross-linker and/or said material components are mixed for curing.

According to a yet further aspect, at least the bonding layer is made from an optically clear resin and/or from an optically clear adhesive, preferably from a cured liquid optically clear adhesive or non-liquid optically clear adhesive tape and/or wherein the bonding layer is configured for optical bonding, preferably between a touchscreen and a transparent cover element layered onto the touchscreen.

According to a yet further aspect, the actuator comprises at least two electrode layers and at least one polymer layer sandwiched between the electrode layers and/or wherein at least one of the electrode layers is made from a graphite material and/or contains carbon powder and/or carbon nanotubes and/or wherein the at least one polymer layer is made from an elastomer material, preferably from a dielectric elastomer material.

According to a yet further aspect, the bonding layer and at least one of the actuator layers are provided onto a component of the display system with interruption or free of interruptions and/or connected to each other.

According to a yet further aspect, the display system comprises at least two system components and the actuator is arranged between said two system components and/or wherein the actuator extends between two system components of the display system, preferably in an actuation orientation.

According to a yet further aspect, the actuator is arranged and/or configured for mechanical stimulation in an orientation along or under an angle to the thickness extension of a cover element, a touchscreen and/or a display device, and/or wherein at least two actuators are arranged and/or configured for mechanical stimulation in different orientations.

According to a yet further aspect, the actuator is arranged and/or configured for generating forces, vibrations, or motions to be sensed by the user and/or for haptic, tactile and/or kinesthetic feedback, preferably during use of the display system and/or via a cover element of the display system, and/or wherein the actuator is arranged and/or configured for surface texture imitation and/or wherein the actuator is configured as a sensor, preferably a force detecting sensor.

According to a yet further aspect, the display system comprises a display device for content presentation, preferably an electronic visual display and/or a Liquid Crystal Display, an OLED display and/or an AMOLED display, and/or a touchscreen, preferably a capacitive touchscreen, and/or a transparent cover element with a touch surface, preferably a transparent glass, polycarbonate or polyethylene terephthalate cover element, and/or a casing, preferably for the display device, touchscreen and/or cover element, and/or wherein the touchscreen is layered onto the display device and/or the cover element is layered onto the touchscreen.

According to a yet further aspect, the display system comprises a support element for transferring motion and/or mechanical stimulation from the actuator to a further component, preferably to the casing, display device, touchscreen and/or cover element, and/or for transmitting mechanical stimulation from the actuator to a TFT unit of the display system and/or wherein the support element is configured for transmitting motions and/or mechanical stimulations in different orientations.

According to a yet further aspect, the actuator layers are applied layer-by-layer onto a cover element, a casing and/or a support element of said display system.

According to a yet further aspect, the actuator extends from a cover element to a casing of the display system, preferably from the cover element to a support protrusion of the casing.

According to a yet further aspect, the actuator extends from a casing to a support element of the display system and/or wherein the support element extents from the actuator to a cover element and/or to a touchscreen of the display system. According to a yet further aspect, the actuator extends from a casing to a display device of the display system and/or wherein the display device extents from the actuator to a touchscreen and/or to a bonding layer between the display device and the touchscreen.

According to a yet further aspect, the actuator extends from a casing to a support element of the display system, said support element extending from the actuator to a TFT unit and/or through or pass by a backlight unit of the display system and/or wherein a backlight unit of the display system is fixed relative to the casing and/or unactuated and/or wherein the transparent cover element, the touchscreen and/or a TFT unit are actuated by the actuator.

According to a yet further aspect, a user interface device, preferably according to any one of the preceding aspects, comprises a cover element for covering a touchscreen and/or display device, and at least one electroactive polymer actuator for providing a feedback to a user by mechanical stimulation, wherein the actuator comprises a plurality of actuator layers, said actuator layers being applied layer-by-layer onto the cover element.

According to a yet further aspect, a vehicle electronic system, in particular vehicle control system and/or vehicle infotainment system, comprises a user interface device, preferably according to any one of the preceding aspects, said user interface device comprising a display system for presentation of content to a user, and at least one electroactive polymer actuator for providing a feedback to the user by mechanical stimulation.

According to a yet further aspect, a vehicle, in particular automobile, bus or truck, comprises a user interface device, preferably according to any one of the preceding aspects, said user interface device comprising a display system for presentation of content to a user, and at least one electroactive polymer actuator for providing a feedback to the user by mechanical stimulation.

According to a yet further aspect, a method for the production of a user interface device, preferably according to at least one of the preceding aspects, comprises the steps of providing a system component of a display system for presentation of content to a user, and building at least one electroactive polymer actuator for the providing of a feedback to the user by mechanical stimulation, wherein the building of the actuator is conducted by applying a plurality of actuator layers layer-by-layer onto the system component.

According to a yet further aspect, a bonding layer is applied between at least two system components of said display system, wherein the bonding layer and at least one of the actuator layers are applied by the same material dispensing device or facility and/or by using the same material and/or material components and/or materials belonging to the same material groups.

According to a yet further aspect, at least one of the actuator layers is applied subsequent to the application of the bonding layer, preferably an electrode layer is applied subsequent to the application of the bonding layer.

According to a yet further aspect, the application of the bonding layer and the at least one actuator layer is conducted in one production step, with or without interruption.

### List of reference signs

- 10: user interface device
- 12: display system
- 14: actuator
- 16: transparent cover element
- 18: touchscreen
- 20: transparent cover portion
- 22: untransparent cover portion
- 23: black print
- 24: bonding layer between transparent cover element 16 and touchscreen 18
- 26: display device
- 28: casing
- 30: bonding layer between touchscreen 18 and display device 26
- 32: support protrusion
- 34: support element
- 36: backlight unit
- 38: TFT unit

## Claims

1. User interface device (10), in particular for an infotainment system of a vehicle and/or a vehicle control system, comprising a display system (12) for presentation of content to a user, and at least one electroactive polymer actuator (14) for providing a feedback to the user by mechanical stimulation, wherein a bonding layer (24, 30) is provided between two system components of said display system, wherein the actuator (14) comprises a plurality of actuator layers, said actuator layers being applied layer-by-layer onto a system component of said display system (12), and wherein the bonding layer (24, 30) and at least one of the actuator layers are applied during one and the same production step and/or by subsequent production steps.

2. User interface device (10) according to claim 1, wherein at least one actuator layer is applied directly or indirectly onto a system component of said display system (12) and/or wherein an adhesive is provided between the actuator and the respective component of the display system (12) and/or wherein the actuator layers are applied to the respective component of the display system (12) free of additional adhesives.

3. User interface device (10) according to claim 1 or 2, wherein the actuator (14) has a customized shape and/or a freeform shape and/or wherein the actuator (14) is arranged as or part of an actuator pattern and/or a customized actuator pattern and/or a continuous actuator pattern.

4. User interface device (10) according to any one of the preceding claims, wherein the bonding layer (24, 30) is provided between a touchscreen (18) and a transparent cover element (16) layered onto the touchscreen (18) and/or between a display device (26) and a touchscreen (18) layered onto said display device (26) and/or between a display device (26) and a transparent cover element (16) layered onto said display device (26) and/or between a display device (26) and a casing (28) for the display device (26) and/or the display system (12), and/or wherein the bonding layer (24, 30) is made from a polymer material.

5. User interface device (10) according to claim4, wherein the bonding layer (24, 30) and at least one of the actuator layers are made from the same material.

6. User interface device (10) according to claim 4 or 5, wherein the bonding layer (24, 30) and at least one of the actuator layers are made from materials belonging to the same material group, preferably the same group of polymers, and/or from materials including the same or partly the same set of material components, preferably with an identical or different component mixing ratio.

7. User interface device (10) according to any one of the preceding claims, wherein at least one of the actuator layers and/or the bonding layer (24, 30) is made from a silicone or acryl and/or acrylic based polymer, preferably from a cured liquid silicone resin and/or an addition cured silicone resin and/or a platinum-catalysed silicone resin.

8. User interface device (10) according to any one of the preceding claims, wherein at least one of the actuator layers and/or the bonding layer (24, 30) is made from a multi-component polymer, preferably a two-component polymer and/or a two-component silicone resin, and/or wherein one material component contains a catalyst and a further material component contains a cross-linker and/or said material components are mixed for curing.

9. User interface device (10) according to any one of the preceding claims, wherein the bonding layer (24, 30) and at least one of the actuator layers are provided onto a component of the display system (12) with interruption or free of interruptions and/or connected to each other.

10. User interface device (10) according to any one of the preceding claims, wherein the actuator (14) is arranged and/or configured for generating forces, vibrations, or motions to be sensed by the user and/or for haptic, tactile and/or kinesthetic feedback, preferably during use of the display system (12) and/or via a cover element (16) of the display system (12), and/or wherein the actuator (12) is arranged and/or configured for surface texture imitation and/or wherein the actuator (12) is configured as a sensor, preferably a force detecting sensor.

11. User interface device (10), preferably according to any one of the preceding claims, comprising a cover element for covering a touchscreen and/or display device, and at least one electroactive polymer actuator for providing a feedback to a user by mechanical stimulation, wherein the actuator comprises a plurality of actuator layers, said actuator layers being applied layer-by-layer onto the cover element.

12. User interface device (10), preferably according to any one of the preceding claims and/or particularly for an infotainment system of a vehicle and/or a vehicle control system, comprising a display system (12) for presentation of content to a user, and at least one electroactive polymer actuator (14) for providing a feedback to the user by mechanical stimulation, wherein the actuator (14) comprises a plurality of actuator layers, said actuator layers being applied layer-by-layer onto a system component of said display system (12).

13. Method for the production of a user interface device (10), preferably according to at least one of claims 1 to 12, comprising the steps of providing a system component of a display system (12) for presentation of content to a user, applying a bonding layer (24, 30) between at least two system components of said display system (12), and building at least one electroactive polymer actuator (14) for the providing of a feedback to the user by mechanical stimulation, wherein the building of the actuator (14) is conducted by applying a plurality of actuator layers layer-by-layer onto the system component, and wherein the application of the bonding layer (24, 30) and the at least one actuator layer is conducted in one production step, with or without interruption.

14. Method according to claim 13, wherein the bonding layer (24, 30) and at least one of the actuator layers are applied by the same material dispensing device or facility and/or by using the same material and/or material components and/or materials belonging to the same material groups and/or wherein at least one of the actuator layers is applied subsequent to the application of the bonding layer (24, 30), preferably an electrode layer is applied subsequent to the application of the bonding layer (24, 30).

15. Method for the production of a user interface device (10), preferably according to at least one of claims 1 to 12, comprising the steps of providing a system component of a display system (12) for presentation of content to a user, and building at least one electroactive polymer actuator (14) for the providing of a feedback to the user by mechanical stimulation, wherein the building of the actuator (14) is conducted by applying a plurality of actuator layers layer-by-layer onto the system component.
